# EUROPÄISCHE PATENTSCHRIFT

(11) **EP 1 345 751 B1**
(45) Veröffentlichungstag und Bekanntmachung des Hinweises auf die Patenterteilung: **14.02.2007**
(21) Anmeldenummer: 01984845.6
(22) Anmeldetag: 14.12.2001
(51) Int. Cl.: B29C 49/46, B29C 49/12, B29C 49/78

(54) **VORRICHTUNG ZUR HERSTELLUNG VON KUNSTSTOFFBEHÄLTERN MITTELS STRECKBLASFORMEN**
DEVICE FOR PRODUCING PLASTIC CONTAINERS BY STRETCH BLOW FORMING
DISPOSITIF POUR FABRIQUER DES CONTENANTS EN PLASTIQUE PAR FORMAGE PAR ETIRAGE-GONFLAGE

(30) Priorität: 29.12.2000 DE 10065652
(43) Veröffentlichungstag der Anmeldung: 24.09.2003
(73) Patentinhaber: Tetra Laval Holdings & Finance S.A., 1009 Pully (CH)
(72) Erfinder: CHATARD, Dominique, 69121 Heidelberg (DE); FUCHS, Jens, 55278 Uelversheim (DE); KINDINGER, Hans, 64625 Wilmshausen (DE); KUHN, Rolf, 55218 Ingelheim (DE); WLACH, Rüdiger, D-64572 Büttelborn (DE); WILHELM, Lothar, D-61184 Karben (DE)
(74) Vertreter: Weber, Dieter
(86) Internationale Anmeldenummer: PCT/EP2001/014743
(87) Internationale Veröffentlichungsnummer: WO 2002/053351

(56) Entgegenhaltungen:
- WO-A-98/06559
- DE-A- 19 938 724
- PATENT ABSTRACTS OF JAPAN vol. 005, no. 076 (M-069), 20. Mai 1981 (1981-05-20) -& JP 56 027330 A (YOSHINO KOGYOSHO CO LTD), 17. März 1981 (1981-03-17) -& DATABASE WPI Week 198119 Derwent Publications Ltd., London, GB; AN 1981-33291D XP002197450 & JP 56 027330 A (YOSHINO KOGYOSHO CO LTD ), 17. März 1981 (1981-03-17)

## Beschreibung

Die Erfindung betrifft eine Vorrichtung zur Herstellung von Behältern aus einem durch Streck-Blasen verformbaren Kunststoff mit einer Form, deren Innenraum dem fertigen Behälter entspricht, der an seinem offenen Ende mit einer Aufnahme mit Gaszuführleitungen gehalten ist, wobei ein beweglicher Streckstempel axial durch die Aufnahme geführt ist und eine Zündeinrichtung angeordnet ist, um ein explosives Gasgemisch innerhalb des Behälters zu zünden.

Aus der internationalen Veröffentlichung mit der Nummer WO98/06559 ist eine Vorrichtung der vorstehend beschriebenen Art zur Herstellung von Behältern aus Kunststoff bekannt, beispielsweise von Flaschen aus Polyethylenterephthalat (PET). Diese PET-Flaschen werden dadurch hergestellt, daß zunächst ein Vorformling auf eine für das Streck-Blasen geeignete Temperatur von etwa 100 - 120°C erwärmt und in eine Werkzeugform eingebracht wird. Mit Hilfe eines bewegbaren Streckstempels wird der Vorformling axial gestreckt. Während der Streckdruck durch Einblasen eines explosiven Gasgemisches in den Vorformling, zum Beispiel ein Gemisch aus Knallgas und einem Inertgas, erzeugt wird, entsteht ein Blasdruck durch Zünden des explosiven Gasgemisches, und dieser Blasdruck preßt die Wandung des Zwischenformlings bzw. des teilweise vorgeformten Behälters ganz an die Innenwand der Form. Das explosive Gasgemisch ist ein Gemisch eines Oxidationsmittels und eines oxidierbaren Bestandteiles, wie zum Beispiel Wasserstoff, Methan oder dergleichen.

Es hat sich bei der technischen Umsetzung gezeigt, daß die mit der bekannten Vorrichtung hergestellten Behälter industriell nicht verwendet werden konnten. Sie waren bezüglich Form und Volumen und auch bezüglich ihrer optischen Erscheinung nicht in ausreichender Qualität herstellbar und reproduzierbar. So war es beispielsweise nicht möglich, PET-Flaschen mit klaren durchsichtigen Wandungen herzustellen. Man vermutete, daß dieses teilweise unschöne Aussehen, sofern es nicht bewußt herbeigeführt wurde oder aus bestimmten Gründen in Kauf genommen werden konnte, durch unvermeidbare Temperatureinflüsse entstand.

Gemäß der EP 1 204 526 hatte man vorgeschlagen, die Aufnahme an ihrem dem Behälter abgewandten Ende fließmitteldicht mit einem Hauptverteilerblock in Eingriff zu bringen, durch welchen der Streckstempel in axialer Verlängerung der Aufnahme beweglich hindurchgeführt ist und an dem wenigstens ein Fließmittelanschluß angebracht ist. Wenngleich die gesamte Konstruktion nach diesem älteren Vorschlag anders war als bei der Vorrichtung bei der oben genannten internationalen Veröffentlichung, hatte man doch festgestellt, daß manchmal die durch die Zündung ausgelöste Verpuffung im Behälter lokal besonders stark war, an Stellen im Abstand vom direkten Wasserstoffeinlaß hingegen keine Verpuffung erfolgte.

Es ist Aufgabe der Erfindung, eine Vorrichtung der eingangs genannten Art so zu verbessern, daß Kunststoffbehälter mit besserem Erscheinungsbild, zum Beispiel mit weitgehend klar durchsichtiger Wandung und zuverlässiger herstellbar sind.

Diese Aufgabe wird erfindungsgemäß dadurch gelöst, daß die Aufnahme an ihrem dem Behälter abgewandten Ende fließmitteldicht mit einem Hauptverteilerblock in Eingriff bringbar ist, durch welchen der Streckstempel in axialer Verlängerung der Aufnahme beweglich hindurchgeführt ist, daß wenigstens ein erster Fließmittelanschluß in einem dem Behälter abgewandten ersten Bereich des Hauptverteilerblockes und ein weiterer Fließmittelanschluß in dem entgegengesetzten, dem Behälter zugewandten zweiten Bereich des Hauptverteilerblockes vorgesehen sind, die Leitungen aus den wenigstens zwei Fließmittelanschlüssen in dem zweiten Bereich in dem Hauptverteilerblock miteinander in Verbindung stehen und daß zwischen der Verbindungsstelle und der Aufnahme eine Leitung als ein einziger gemeinsamer Strömungskanal gebildet ist.

Neu gegenüber der EP 1 204 526 ist, daß die Leitungen aus den wenigstens zwei Fließmittelanschlüssen in dem zweiten Bereich in dem Hauptverteilerblock miteinander in Verbindung stehen und daß zwischen der Verbindungsstelle und der Aufnahme eine Leitung als ein einziger gemeinsamer Strömungskanal gebildet ist.

Erfindungsgemäß ist das vorrichtungsseitige Volumen derart klein, daß Reaktionsprodukte, bei Verwendung von Knallgas zum Beispiel Wasser, in erheblich geringerer Menge übrig bleiben. Durch die erfindungsgemäßen Merkmale erreicht man das Verschließen eines kleinen vorrichtungsseitigen Innenraumes. Dadurch wird insbesondere ein Ansammeln der unerwünschten Reaktionsprodukte (Wasser) vermieden. Mindestens der Behälter selbst, vorzugsweise sogar der Behälter mit Aufnahme, wird nach der Explosion abgeführt und führt damit die angesammelten Reaktionsprodukte mit. In dem übrigen vorrichtungsseitigen Innenraum verbleiben daher unmerkliche Mengen an Reaktionsprodukt, die selbst bei einem kontinuierlichen Herstellungsverfahren nach längerer Zeit vernachlässigbar bleiben können. Infolgedessen kann entgegen der internationalen Vorveröffentlichung ein Kunststoffbehälter mit besserem Erscheinungsbild, zum Beispiel mit weitgehend klar durchsichtiger Wandung und zuverlässiger hergestellt werden.

Verwendet man den erfindungsgemäßen ersten Fließmittelanschluß oder die mehreren ersten Fließmittelanschlüsse in dem dem herzustellenden Behälter abgewandten ersten Bereich des Hauptverteilerblocks, dann kann man durch diesen Anschluß beispielsweise Oxidationsmittel einleiten oder ein Gemisch mit Oxidationsmittel oder sogar Luft. Befindet sich der zweite Fließmittelanschluß näher an dem Behälter und führt man durch diesen den oxidierbaren Bestandteil, wie zum Beispiel Wasserstoff oder Methan, ein, dann kann man erreichen, daß in dem entfernteren ersten Bereich des Hauptverteilerblockes kaum oxidierbarer Bestandteil verbleibt mit der Folge eines guten Vermischens oder guten Einmischens des oxidierbaren Bestandteils in die anderen Fließmittel, so daß sich eine gleichmäßige gute Verpuffung ergibt.

Das Vermischen der verschiedenen Fließmittelbestandteile erfolgt an der Verbindungsstelle, an welcher die Leitungen aus den zwei Fließmittelanschlüssen miteinander in Verbindung stehen, zumal von der Verbindungsstelle an in Strömungsrichtung zu dem Behälter hin nur ein einziger Strömungskanal vorhanden ist, durch welchen alle Fließmittel hindurchströmen müssen. Sie vermischen sich auf diesem Strömungsweg, so daß entsprechend der Menge oxidierbaren Bestandteiles (Wasserstoff oder Methan) eine nahezu stöchiometrische Verteilung erreicht wird, die über fast den gesamten Raum des herzustellenden Behälters homogen ist.

Durch die Erfindung kann man den oxidierbaren Bestandteil (Wasserstoff, Methan, usw.) dosiert in einen laufenden Fließmittelstrom einführen. Die Bestimmung der jeweiligen Dosis gelingt über die Zeit, d.h. über das Öffnen einer Zuleitung bis zu deren Schließen. Vorzugsweise kann man auch die anderen Fließmittel, insbesondere das Oxidationsmittel, bezüglich seiner Menge zeitlich so steuern, daß diese Fließmittel nach dem Öffnen eines Zuleitungsventils strömen, bis dieses Ventil wieder geschlossen wird. Gemäß der Erfindung ist die Zeitdauer zwischen Öffnen und Schließen der Fließmittel mit dem Oxidationsmittel länger als die für das oxidierbare Mittel. Dadurch erreicht man, daß die Fließmittel mit dem Oxidationsmittel noch an der Verbindungsstelle vorbeiströmen, wenn schon das Fließmittel mit dem oxidierbaren Bestandteil abgeschaltet ist. Die Folge davon ist, daß es in dem Bereich abstromig von der Verbindungsstelle kaum Fließmittel mit dem oxidierbaren Bestandteil gibt. Die Explosion wird sich also in den vom Behälter entfernten Bereich des Hauptverteilerblockes nicht ausbreiten.

Betrachtet man bei einer bestimmten Ausführungsform die Anordnung des Streckstempels im wesentlichen in Lotrichtung, wobei der herzustellende Behälter dann oben angeordnet ist, dann befindet sich der Hauptverteilerblock in einem Abstand von diesem unten und auch unterhalb der Aufnahme, und der erste Bereich des Hauptverteilerblockes befindet sich unten, der zweite Bereich oben näher am Behälter. Man kann im Betrieb als Fließmittel für die Oxidationsbestandteile Luft verwenden. Die Luft strömt dann unten ein und nach oben durch den Hauptverteilerblock derart, daß man nach Schließen aller Ventile von einer Luftsäule sprechen kann, die von dem unteren, entfernten zweiten Bereich mindestens bis etwa in den mittleren Bereich des Hauptverteilerblockes reicht. Durch das längere Nachströmen der Luft nach Abschalten des oxidierbaren Bestandteils wird letzterer an der Verbindungsstelle vorbei mit nach oben gerissen. Ab der Zuström- bzw. Verbindungsstelle der zwei Fließmittel nach oben näher zum Behälter hin gibt es dann kein oxidierbares Fließmittel mehr. Im Bereich darunter und in größerer Entfernung vom Behälter kann sich also kein Knallgas entwickeln, und damit kann hier weder eine unter Umständen gefährliche Explosion vorkommen, noch sich Reaktionsprodukt - bei Knallgas also Wasser - bilden.

Zweckmäßig ist es bei einer bevorzugten Ausführungsform der Erfindung, wenn man als Oxidationsmittel Luft und als oxidierbaren Bestandteil Wasserstoff nimmt und wenn 30 Millisekunden nach Öffnen der Luftventile das Ventil für Wasserstoff geöffnet wird. Wasserstoff strömt dann während einer Zeit von 90 Millisekunden bis 140 Millisekunden, je nach der Größe des herzustellenden Behälters, zum Beispiel eines flaschenförmigen Behälters oder einer Kunststofflasche. Danach wird die Wasserstoffzufuhr abgeschaltet, und die Luft strömt noch weiter an der Verbindungsstelle vorbei in Richtung zu dem herzustellenden Behälter. 250 Millisekunden lang strömt die Luft. Dann wird auch deren Zuströmventil geschlossen. Versuche mit diesen Werten haben eine gleichmäßige und gute Verpuffung bzw. Explosion des Gasgemisches in dem herzustellenden Behälter ergeben. Das Zündsignal wurde übrigens direkt nach dem letzten Schließen des letzten Luftventils ausgelöst.

Bei vorteilhafter weiterer Ausgestaltung der Erfindung weist der zweite Fließmittelanschluß ein starres, kurzes Anschlußrohr mit fest angebrachtem Steuerventil auf. Die Zuleitung für das oxidierbare Fließmittel (zum Beispiel Wasserstoff oder Methan) ist unbeweglich und begünstigt einen hohen Sicherheitsaspekt. Die starr verlegten Rohre können durch Schweißen miteinander verbunden werden, so daß sich der höchste sicherheitstechnische Standard ergibt. Vermeidet man biegbare Schläuche und verwendet man die starren, kurzen Anschlußrohre, dann kann man das eingeschlossene Volumen genau definieren, wodurch die Komponentenmenge des zu erstellenden Gemisches genauer bestimmt werden kann. Das Anschlußrohr von dem Hauptverteilerblock bis zu dem Steuerventil hat bei einer besonders bevorzugten Ausführungsform der Erfindung vorzugsweise eine Länge von 5 bis 20 mm und ist ganz besonders günstig ausgestaltet, wenn es etwa 10 mm lang ist.

Günstig ist es gemäß der Erfindung auch, wenn in dem vorzugsweise ortsfesten Hauptverteilerblock ein relativ zu diesem axial bewegbar angetriebener Hohlkolben vorgesehen ist, der an seinem äußeren, der Aufnahme zugewandten Ende eine zu der Aufnahme passende, ringförmige Gegendichtfläche aufweist. Zwar kann man den Hauptverteilerblock auch einstückig aufbauen und mit einer entsprechend bewegten Aufnahme dichtend so verbinden, daß diese Verbindung zwischen Aufnahme und Hauptverteilerblock gesteuert gelöst werden kann. Das Lösen gelingt aber durch die vorstehende Maßnahme mit dem Hohlkolben besonders günstig. Um den Hauptverteilerblock mit der Aufnahme zu verbinden bzw. von dieser zu lösen, braucht man dann nämlich weder den Hauptverteilerblock noch die Aufnahme axial - etwa in Richtung des hohlen Streckstempels - zu bewegen, weil der Hohlkolben axial bewegbar angetrieben ist, vorzugsweise pneumatisch. An seinem äußeren Ende trägt der Hohlkolben eine zu der Aufnahme passende Gegendichtfläche, die beim Anschließen der Aufnahme an den Hauptverteilerblock mit der Dichtfläche der Aufnahme in dichtenden Eingriff tritt. Nach dem Blas- und Sterilisierungsprozeß wird die Bewegung des Hohlkolbens umgesteuert, die Dichtfläche kommt von der Gegendichtfläche außer Eingriff, und dann kann die Aufnahme in der vorstehend beschriebenen Weise senkrecht zu ihrer Längsachsenrichtung verschoben werden. Dieser Verschiebetransport erfolgt jedesmal nach einem Blas-Sterilisierungsvorgang des schrittweise laufenden Herstellungsverfahrens.

Zweckmäßig ist es gemäß der Erfindung ferner, wenn der Hauptverteilerblock aus einem Verteilerblock und einem hohlen Adapter besteht. Letzteren kann man so an der dem Behälter zugewandten Seite des Verteilerblockes ansetzen und dort befestigen, daß beide Teile (Verteilerblock und Adapter) einen festen, quasi einteiligen Hauptverteilerblock bilden, wobei dennoch im Falle einer Umrüstung der Zuleitung für die oxidierbaren Bestandteile nur der Adapter umgerüstet oder umgebaut werden müßte, dazu vom Verteilerblock abgenommen und ausgetauscht werden müßte.

Die Erfindung ist vorteilhaft weiter dadurch ausgestaltet, daß die Aufnahme hohl ist und an ihrem dem Behälter abgewandten Ende eine Dichtfläche aufweist, durch welche der Streckstempel in axialer Verlängerung der Aufnahme beweglich hindurchgeführt ist. Die Aufnahme ist vorzugsweise hohl, damit der Streckstempel durch die gesamte, länglich ausgestaltete Aufnahme von ihrem einen Ende axial bis zu ihrem gegenüberliegenden Ende hindurchbewegt werden kann. Gleichwohl ist die Aufnahme mit dem Verteilerblock fließmitteldicht durch die Dichtfläche verbindbar, die sich um den Raum für den Streckstempel herum erstreckt und daher ringförmig ist. Es ist günstig, wenn der Streckstempel durch diese ringförmige Dichtfläche fließmitteldicht hindurchgeführt ist, damit gegebenenfalls Fließmittel, vorzugsweise Gase, aus dem Verteilerblock durch die Aufnahme in den herzustellenden Behälter gedrückt werden können, ohne daß die Gase nach außerhalb der Vorrichtung gelangen. Durch die hohle Ausgestaltung der Aufnahme kann also nicht nur der Streckstempel in den Behälter hindurch geführt und aus diesem heraus gezogen werden, sondern es können auch Fließmittel zwischen Außenfläche des Streckstempels und Innenfläche der Aufnahme in den Behälter geführt werden, und zusätzlich wird das Volumen innerhalb der Aufnahme verhältnismäßig klein gehalten. Insbesondere kann der für die Explosion vorgesehene Raum auf den erwähnten vorrichtungsseitigen Innenraum beschränkt werden, so daß in den Zuleitungen mit Sicherheit chemische Reaktionen mit dem Entstehen von Reaktionsprodukten nicht stattfinden.

Zweckmäßig ist es gemäß der Erfindung ferner, wenn in dem dem Behälter zugewandten Bereich des hohlen Streckstempels eine Zündeinrichtung in diesem angebracht und vorzugsweise über in dem hohlen Streckstempel verlaufende Kabel mit einer Steuereinheit elektrisch verbunden ist. Das Zünden des explosiven Fließmittelgemisches kann bei einem solchen Aufbau des hohlen Streckstempels nahezu im Zentrum des herzustellenden Behälters erfolgen. Weiter außerhalb des Behälters gelegene Vorrichtungsteile können dann prozeßabhängig abgekoppelt oder geschlossen werden. Die Betätigung der Zündeinrichtung über das Kabel oder die Leiterbahn gelingt ebenso vorteilhaft durch die hohle Ausgestaltung des Streckstempels.

Es ist gemäß der Erfindung von Vorteil, wenn die Aufnahme senkrecht zu ihrer Längsmittelachse bewegbar angetrieben ist. Hierdurch ist es überraschend möglich, einen großen Teil des vorrichtungsseitigen Innenraumes, nämlich den Raum in der hohlen Aufnahme, nach jedem Streck- und Blasprozeß, d.h. insbesondere nach jeder Verbrennung, von der im übrigen ortsfesten Vorrichtung, zum Beispiel dem Hauptverteilerblock mit dem Hohlkolben, getrennt abzutransportieren mitsamt den an den Wandungen anhaftenden Reaktionsprodukten. Alle diese Reaktionsprodukte nehmen bei dem nächstfolgenden Prozeß des Streckens und Blasens und insbesondere bei dem chemischen Prozeß der Verbrennung nicht mehr teil. Der vorrichtungsseitige Innenraum, der allenfalls mit Reaktionsprodukten behaftet sein kann, beschränkt sich dann auf den Raum im Hohlstempel und im Hauptverteilerblock. Beim Einsatz von Knallgas wird dann derart wenig Wasser als Reaktionsprodukt in den nächsten Verbrennungsprozeß mitgenommen, daß eine Beeinträchtigung der Behälterinnenwandungen während und nach der Explosion nicht zu befürchten ist.

Erfindungsgemäß kann man ferner in dem Hauptverteilerblock zur Führung des Streckstempels eine dichtende Durchführung in Flucht zu dem Hohlkolben anbringen. Mit dieser gelingt die Bewegung des Streckstempels in axialer Richtung durch den Hauptverteilerblock, dessen Hohlkolben, die nachgeschaltete Aufnahme und in den Behälter hinaus bzw. aus diesen Teilen heraus, obgleich der vorrichtungsseitige Innenraum gasdicht abgeschlossen bleibt.

Es sei auch angemerkt, daß Drucksensoren und Temperaturmeßgeräte an verschiedenen Stellen in der Vorrichtung angeordnet sein können, vorzugsweise im Bereich des Hauptverteilerblocks, aber auch in dem hohlen Streckstempel.

Es versteht sich, daß die Zündeinrichtung auf unterschiedlichen physikalischen Prinzipien beruhen kann. Die Zündung des Mediengemisches erfolgt im einfachsten Fall elektrisch über eine Funkenstrecke, die zum Beispiel aus einer Zündkerze besteht, die am Streckstempel oder am Verteiler angebracht sein kann; oder mittels statischer Entladung. Daneben sind auch andere Zündmethoden denkbar, zum Beispiel durch Einstrahlung elektromagnetischer Energie, etwa in Form eines Laser-, Hochfrequenz- oder Mikrowellenpulses oder auch mit Hilfe eines katalytischen Vorganges.

Eine praktische Ausführungsform ist erfindungsgemäß weiterhin dadurch gekennzeichnet, daß die Zündeinrichtung in dem Hauptverteilerblock angebracht ist. Den Streckstempel umgeben dann der Raum im Hauptverteilerblock, der Raum zwischen Streckstempel und Hohlkolben und der zwischen Streckstempel und Aufnahme mit Abstand. Dieser Abstand bedeutet einen Ringraum, den man als Fließmittelkanal betrachten und entsprechend auslegen kann. Bei großer Auslegung können größere Mengen Fließmittel in den Behälter gepumpt werden und umgekehrt. Die durch die Zündeinrichtung im Hauptverteilerblock ausgelöste Explosion pflanzt sich dann sehr schnell in dem gesamten mit Fließmittel und Wasserstoff gefüllten Raum fort. Dieser Raum ist außen durch die Rückschlagventile an den Leitungen am Verteilerblock begrenzt.

Durch die erfindungsgemäßen Maßnahmen ist es möglich, die Explosion nur über die Menge des eingeführten oxidierbaren Bestandteiles des Gemisches zu steuern. Es wird eine homogene Verteilung der Bestandteile des Gasgemisches erreicht. In der Zeit, in welcher Luft als Fließmittelgemisch mit dem Oxidationsmittel einströmen gelassen wird, wird über eine kürzere Zeit mit späterem Öffnen und früherem Schließen Wasserstoff oder Methan eingeführt, so daß ab der Einführ- oder Verbindungsstelle die Verwirbelungen für ein gutes Vermischen sorgen, so daß die in dem herzustellenden Behälter dann ankommenden Gase gut und homogen vermischt sind. In dem von dem Behälter abgewandten Bereich des Hauptverteilerblockes werden sich dann kaum oxidierbare Bestandteile des explosiven Gemisches befinden, so daß die Explosion sich nicht bis in den Hauptverteilerblock hinein fortsetzt.

Weitere Vorteile, Merkmale und Anwendungsmöglichkeiten der vorliegenden Erfindung ergeben sich aus der folgenden Beschreibung in Verbindung mit den anliegenden Zeichnungen, die bevorzugte Ausführungsformen zeigen. Es stellen dar:
- Figur 1: im Schnitt den Hauptverteilerblock mit dem zentral durch diesen hindurchgeführten Streckstempel und dem senkrecht dazu verlaufenden zweiten Fließmittelanschluß, durch welchen oxidierbare Bestandteile zugeführt werden können, und
- **Figur 2**: eine Querschnittsansicht entlang der Linie II-II der Figur 1.

Nicht dargestellt ist der herzustellende, in diesem Falle flaschenförmige Behälter aus Kunststoff, zum Beispiel aus PET. Der PET-Behälter ist mit seinem offenen Ende nach unten zu denken. Er wird dichtend mit der Oberseite der nicht gezeigten Aufnahme verbunden und dann von dieser gehalten. Die Aufnahme hat Hülsenform und ist gegenüber den Zuleitungen und anderen Werkzeugteilen frei beweglich in einer Richtung senkrecht durch den Streckstempel 1, der als dünnes hohles Rohr gezeigt ist und den allgemein mit 2 bezeichneten Hauptverteilerblock mittig durchzieht. Der Streckstempel 1 ist axial nicht nur durch die nicht dargestellte Aufnahme geführt, sondern durchzieht eine dichtende Durchführung 3, den vorrichtungsseitigen Innenraum 4 und mit Abstand einen Hohlkolben 5, der in der durchgehenden vertikalen Bohrung 6 des Verteilerblockes 7 und auch die durchgehende vertikale Bohrung 8 des Adapters 9 dichtend sitzt. Man erkennt hier zum Beispiel die Kolbendichtung 10 in der Mitte des Verteilerblockes 7 und die Kolbendichtung 10' im oberen ersten Bereich des Hauptverteilerblockes 2 (hier am Adapter 9).

Der hohl ausgestaltete Verteilerblock 7 bildet zusammen mit dem ebenfalls hohlen Adapter 9 den insgesamt mit 2 bezeichneten Hauptverteilerblock. Verteilerblock 7 und Adapter 9 sind fest aneinander angebracht. Relativ zu diesen ist dagegen der Hohlkolben 5 parallel zur Längserstreckung des Streckstempels 1 bei dieser Ausführungsform vertikal nach oben und unten beweglich. Diese Bewegungsmöglichkeit des Hohlkolbens 5 ist durch den Doppelpfeil 11 dargestellt. Pneumatische Anschlüsse 12 gestatten die Steuerung der Bewegung des Hohlkolbens 5 entsprechend dem Doppelpfeil 11.

Der Hauptverteilerblock 2 hat in einem dem vertikal oben angeordnet zu denkenden flaschenförmigen Behälter abgewandten ersten Bereich einen ersten Fließmittelanschluß 13, durch den zum Beispiel Luft aus einer nicht dargestellten Zuleitung mit steuerbaren Ventilen in den vorrichtungsseitigen Innenraum 4 hineingedrückt wird.

Der zweite Fließmittelanschluß 14 (zum Beispiel für das oxidierbare Fließmittel, Wasserstoff oder Methan) ist in dem entgegengesetzten, dem Behälter oben zugewandten zweiten Bereich des Hauptverteilerblockes 2 vorgesehen.

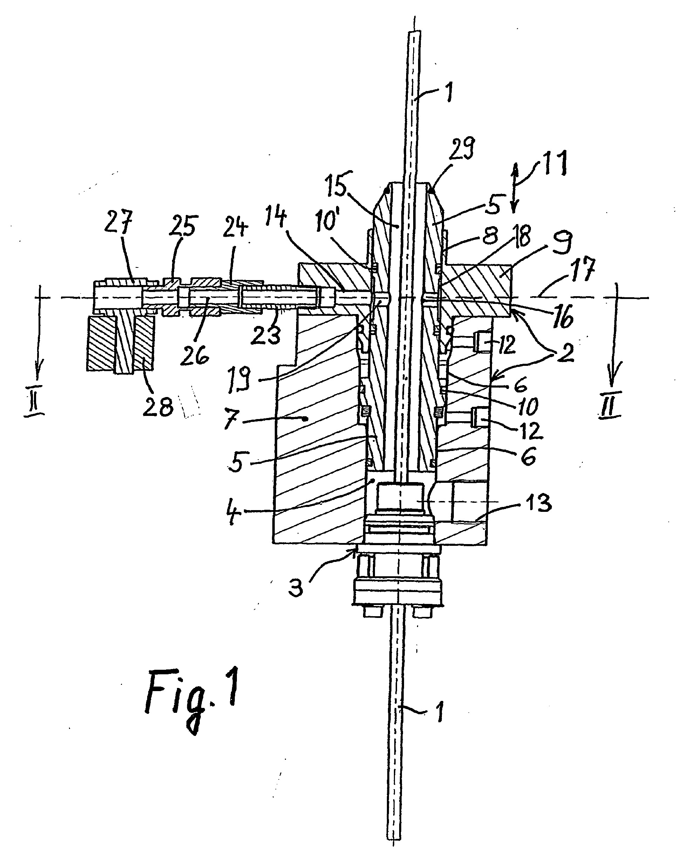

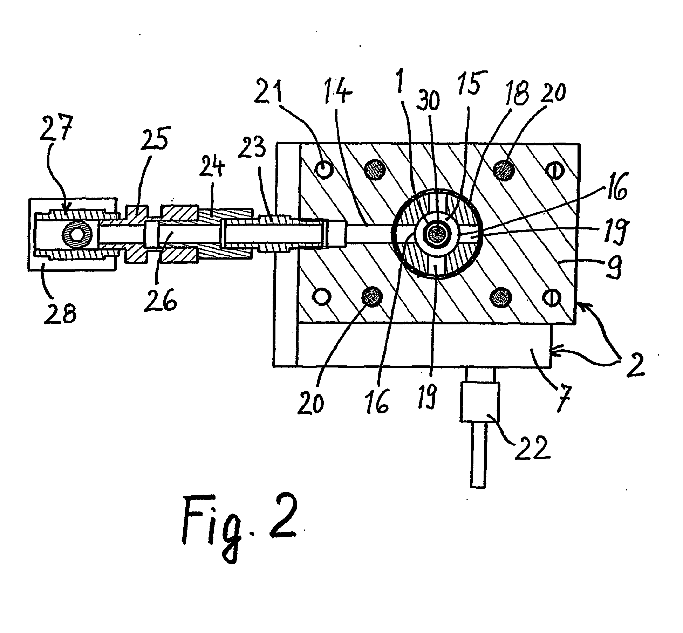

Der Hohlzylinder 5 ist mit einer als zentraler Strömungskanal 15 ausgebildeten Leitung versehen, die eine Leitung für die eingeblasene Luft im unteren und für das Gemisch Luft mit Wasserstoff im oberen Bereich darstellt. Diese Leitungen in dem oberen flaschennahen Bereich in dem Hauptverteilerblock 2 bzw. der zweite Fließmittelanschluß 14 und die als zentraler Strömungskanal ausgebildete Leitung 15 stehen miteinander in Verbindung. Die entsprechende Verbindungsstelle 16 liegt auf der Höhe der in Figur 1 gestrichelt gezeigten horizontalen Ebene 17, welche die Sichtebene der Figur 2 ist. Die Leitung des zweiten Fließmittelanschlusses 14 verläuft in den Figuren 1 und 2 von links nach rechts auf die durchgehende vertikale Bohrung 8 hin und mündet in einen Ringspalt 18, welcher den Hohlkolben 5 außen ganz umzieht. Von diesem Ringspalt 18 erstrecken sich Durchtrittslöcher 19 bis zu dem zentralen Strömungskanal 15 hin. Es gibt vier jeweils um 90° zueinander versetzt angeordnete Durchtrittslöcher 19, damit von dem zweiten Fließmittelanschluß 14 kommendes Fließmittel über den Ringspalt 18 und die Durchtrittslöcher 19 möglichst gleichmäßig den zentralen Strömungskanal 15 erreicht. Die Verbindungsstelle 16 ist also die Berührungsfläche zwischen den Durchtrittslöchern 19 und dem zentralen Strömungskanal 15.

In Figur 2 sieht man vier Befestigungsschrauben 20, mit denen der hohle Adapter 9 an dem Verteilerblock 7 unter Bildung des Hauptverteilerblockes 2 verschraubt ist. Außen erkennt man femer vier Gewindelöcher 21, mit deren Hilfe der Hauptverteilerblock 2 an der Maschine angeschraubt wird.

Unten rechts ist in Figur 2 weiterhin ein Drucksensor 22 angedeutet.

Der zweite Fließmittelanschluß 14 im Adapter 9 ist in der Darstellung der beiden Figuren nach links hin mit einem Rückschlagventil 23 verbunden. Ihm schließt sich nach außen links eine erste Verschraubung 24 und weiter anschließend eine zweite Verschraubung 25 an. Durch diese wird eine Zuleitung 26 gebildet, welche den zweiten Fließmittelanschluß 14 mit dem Steuerventil 27 mit der Magnetspule 28 verbindet.

In Figur 1 ist die oben schon erwähnte Aufnahme zu denken, welche durch Hochfahren des Hohlzylinders 5 nach oben in Richtung des Pfeils 11 über die Gegendichtfläche 29 in Dichteingriff kommt.

Die nicht dargestellte Zündeinrichtung an dem hohlen Streckstempel 1 ist über das in Figur 2 sichtbare Kabel 30 mit einer nicht dargestellten Steuereinheit elektrisch verbunden.

Die Dosis der eingeführten Menge Wasserstoff oder Methan wird durch eine Zeitsteuerung des Steuerventils 27 zeitgesteuert. Von der Verbindungsstelle 16 wird dieser oxidierbare Bestandteil (Wasserstoff oder Methan) in einen nach oben in dem zentralen Strömungskanal 15 geführten Luftstrom mitgerissen und mit dem Luftstrom zu einem homogen verteilten Gemisch vermischt. Auch nach Abschalten des Steuerventils 27 strömt die Luft noch weiter in dem zentralen Strömungskanal nach oben, bis sie schließlich auch abgeschaltet wird. Dadurch ist sichergestellt, daß unterhalb der Mitte des Hohlkolbens 15 und zumeist schon unterhalb der Verbindungsstelle 16 ein oxidierbarer Bestandteil aus dem zweiten Fließmittelanschluß 14 nicht oder fast nicht vorhanden ist.

### Bezugszeichenliste

- 1: Streckstempel
- 2: Hauptverteilerblock
- 3: dichtende Durchführung
- 4: vorrichtungsseitiger Innenraum
- 5: Hohlkolben
- 6: durchgehende vertikale Bohrung
- 7: Verteilerblock
- 8: durchgehende vertikale Bohrung
- 9: Adapter
- 10, 10': Kolbendichtung
- 11: Doppelpfeil (Bewegungsmöglichkeit des Hohlkolbens 5)
- 12: pneumatischer Anschluß
- 13: erster Fließmittelanschluß (für Luft)
- 14: zweiter Fließmittelanschluß (für H₂; oxidierbare Fließmittel)
- 15: als zentraler Strömungskanal ausgebildete Leitung
- 16: Verbindungsstelle
- 17: horizontale Ebene
- 18: Ringspalt
- 19: Durchtrittslöcher
- 20: Befestigungsschraube
- 21: Gewindelöcher
- 22: Drucksensor
- 23: Rückschlagventil
- 24: erste Verschraubung
- 25: zweite Verschraubung
- 26: als Zuleitung ausgebildete Leitung
- 27: Steuerventil
- 28: Magnetspule
- 29: Gegendichtfläche
- 30: Zündkabel

## Patentansprüche

1. Vorrichtung zur Herstellung von Behältern aus einem durch Streck-Blasen verformbaren Kunststoff mit einer Form, deren Innenraum dem fertigen Behälter entspricht, der an seinem offenen Ende von einer Aufnahme mit Gaszuführleitungen gehalten ist, wobei ein beweglicher Streckstempel (1) axial durch die Aufnahme geführt ist und eine Zündeinrichtung angeordnet ist, um ein explosives Gasgemisch innerhalb des Behälters zu zünden, **dadurch gekennzeichnet, daß** die Aufnahme an ihrem dem Behälter abgewandten Ende fließmitteldicht durch eine Gegendichtfläche (29) mit einem Hauptverteilerblock (2) in Eingriff bringbar ist, durch welchen der Streckstempel (1) in axialer Verlängerung der Aufnahme beweglich hindurchgeführt ist, daß wenigstens ein erster Fließmittelanschluß (13) in einem dem Behälter abgewandten ersten Bereich des Hauptverteilerblockes (2) und ein weiterer Fließmittelanschluß (14) in dem entgegengesetzten, dem Behälter zugewandten zweiten Bereich des Hauptverteilerblockes (2) vorgesehen sind, die Leitungen (26, 15) aus den wenigstens zwei Fließmittelanschlüssen (13, 14) in dem zweiten Bereich in dem Hauptverteilerblock (2) miteinander in Verbindung stehen und daß zwischen der Verbindungsstelle (16) und der Aufnahme eine Leitung als ein einziger gemeinsamer Strömungskanal (15) gebildet ist.

2. Vorrichtung nach Anspruch 1, **dadurch gekennzeichnet, daß** der zweite Fließmittelanschluß (14) ein starres, kurzes Anschlußrohr (24, 25) mit fest angebrachtem Steuerventil (27) aufweist.

3. Vorrichtung nach Anspruch 1 oder 2, **dadurch gekennzeichnet, daß** in dem vorzugsweise ortsfesten Hauptverteilerblock (2) ein relativ zu diesem axial bewegbar angetriebener Hohlkolben (5) vorgesehen ist, der an seinem äußeren, der Aufnahme zugewandten Ende eine zu der Aufnahme passende, ringförmige Gegendichtfläche (29) aufweist.

4. Vorrichtung nach einem der Ansprüche 1 bis 3, **dadurch gekennzeichnet, daß** der Hauptverteilerblock (2) aus einem Verteilerblock (7) und einem hohlen Adapter (9) besteht.

5. Vorrichtung nach einem der Ansprüche 1 bis 4, **dadurch gekennzeichnet, daß** die Aufnahme hohl ist und an ihrem dem Behälter abgewandten Ende eine ringförmige Dichtfläche aufweist, durch welche der Streckstempel (1) in axialer Verlängerung der Aufnahme beweglich hindurchgeführt ist

6. Vorrichtung nach einem der Ansprüche 1 bis 5, **dadurch gekennzeichnet, daß** in dem dem Behälter zugewandten Bereich des hohlen Streckstempels (1) eine Zündeinrichtung in diesem angebracht und vorzugsweise über in dem hohlen Streckstempel (1) verlaufende Kabel (30) mit einer Steuereinheit elektrisch verbunden ist.

7. Vorrichtung nach einem der Ansprüche 1 bis 6, **dadurch gekennzeichnet, daß** die Aufnahme senkrecht zu ihrer Längsmittelachse bewegbar angetrieben ist.

8. Vorrichtung nach einem der Ansprüche 1 bis 7, **dadurch gekennzeichnet, daß** in dem Hauptverteilerblock (2) zur Führung des Streckstempels (1) eine dichtende Durchführung (3) in Flucht zu dem Hohlkolben (5) angebracht ist.

9. Vorrichtung nach einem der Ansprüche 1 bis 8, **dadurch gekennzeichnet, daß** die Zündeinrichtung in dem Hauptverteilerblock (2) angebracht ist.

## Claims

1. Device for the production of containers from a plastic which is deformable by stretch-blow moulding with a mould, the inner space of which corresponds to that of the finished container, which is held at its open end by a holder with gas supply lines, a moveable stretching die (1) being guided axially through the holder and an ignition device being arranged in order to ignite an explosive gas mixture inside the container, **characterised in that** the holder at its end facing away from the container can be brought via a lock washer surface (29) into flow-agent-tight engagement with a main distribution block (2), through which the stretching die (1) can be movably passed in axial extension of the holder, **in that** at least one first flow-agent connection (13) is provided in a first region of the main distributor block (2) facing away from the container and a further flow-agent connection (14) is provided in the second, opposite, region of the main distributor block (2) facing the container, the supply lines (26, 15) out of the at least two flow-agent connections (13, 14) in the second region in the main distributor block (2) are connected with one another, and that between the connection point (16) and the holder a supply line is formed as one single shared flow channel (15).

2. Device according to claim 1, **characterised in that** the second flow-agent connection (14) has a rigid, short connection pipe (24, 25) with firmly fitted control valve (27).

3. Device according to claim 1 or claim 2, **characterised in that** in the preferably stationary main distributor block (2) a hollow piston (5), movably driven axially relative to same is provided, which, on its outer end facing the holder, has a ring-shaped lock-washer surface (29) matching the holder.

4. Device according to one of claims 1 to 3, **characterised in that** the main distributor block (2) consists of a distributor block (7) and a hollow adapter (9).

5. Device according to one of claims 1 to 4, **characterised in that** the holder is hollow and, at its end facing away from the container, has a ring-shaped sealing surface, through which the stretching die (1) is movably passed in axial extension of the holder.

6. Device according to one of claims 1 to 5, **characterised in that** in the region of the hollow stretching die (1) facing the container, an ignition device is fitted into same, and preferably electrically connected to a control unit via cables (30) passing through the hollow stamping die (1).

7. Device according to one of claims 1 to 6, **characterised in that** the holder is movably driven perpendicularly to its longitudinal central axis.

8. Device according to one of claims 1 to 7, **characterised in that**, in the main distributor block (2), a sealing duct (3) is fitted in alignment with the hollow piston (5) to guide the stretching die (1).

9. Device according to one of claims 1 to 8, **characterised in that** the ignition device is fitted in the main distributor block (2).

## Revendications

1. Dispositif de fabrication de récipients à partir d'une matière plastique qui peut être déformée par soufflage-étirage, dont la forme correspond à l'espace intérieur du récipient fini, qui est maintenu à son extrémité ouverte dans un logement comportant des conduites d'amenée de gaz, un piston d'étirage mobile (1) étant guidé axialement dans le logement et un dispositif d'allumage étant prévu pour allumer un mélange de gaz explosif à l'intérieur du récipient, **caractérisé en ce que** le logement peut être amené en engagement de façon étanche au fluide, à son extrémité opposée au récipient, par une surface d'étanchéité antagoniste (29) avec un bloc de distributeur principal (2) qui est traversé par le piston d'étirage (1) mobile dans le prolongement axial du logement, **en ce qu'**au moins un premier raccord de fluide (13) est prévu dans une première région, opposée au récipient, du bloc de distributeur principal (2) et un autre raccord de fluide (14) est prévu dans la deuxième région opposée, dirigée vers le récipient, du bloc de distributeur principal (2), **en ce que** les conduites (26, 15) sont en liaison l'une avec l'autre depuis au moins deux raccords de fluide (13, 14) dans la deuxième région dans le bloc de distributeur principal (2) et **en ce que**, entre le point de raccordement (16) et le logement, une conduite est formée en canal d'écoulement unique commun (15).

2. Dispositif selon la revendication 1, **caractérisé en ce que** le deuxième raccord de fluide (14) comporte un tube de raccordement (24, 25), court et rigide, sur lequel un clapet de commande (27) est monté fixe.

3. Dispositif selon la revendication 1 ou 2, **caractérisé en ce que**, dans le bloc de distributeur principal (2) avantageusement fixe, il est prévu un piston creux (5) qui est entraîné de façon être mobile suivant l'axe de ce bloc de distributeur principal et qui comporte, à son extrémité extérieure opposée au logement, une surface d'étanchéité antagoniste annulaire (29) qui est adaptée au logement.

4. Dispositif selon l'une des revendications 1 à 3, **caractérisé en ce que** le bloc de distributeur principal (2) est constitué d'un bloc de distributeur (7) et d'un adaptateur creux (9).

5. Dispositif selon l'une des revendications 1 à 4, **caractérisé en ce que** le logement est creux et comporte, à son extrémité opposée au récipient, une surface d'étanchéité annulaire qui est traversée par le piston d'étirage (1) mobile dans le prolongement axial du logement.

6. Dispositif selon l'une des revendications 1 à 5, **caractérisé en ce que** le dispositif d'allumage est monté dans la région du piston d'étirage creux (1) qui est dirigée vers le récipient et est relié électriquement à une unité de commande, avantageusement par des câbles (30) s'étendant dans le piston d'étirage creux (1).

7. Dispositif selon l'une des revendications 1 à 6, **caractérisé en ce que** le logement est entraîné de façon être mobile perpendiculairement à son axe médian longitudinal.

8. Dispositif selon l'une des revendications 1 à 7, **caractérisé en ce qu'**un passage étanche (3) est monté dans le bloc de distributeur principal (2), en étant aligné avec le piston creux (5), afin de guider le piston d'étirage (1).

9. Dispositif selon l'une des revendications 1 à 8, **caractérisé en ce que** le dispositif d'allumage est monté dans le bloc de distributeur principal (2).
